**Europäisches Patentamt**

**European Patent Office**

**Office européen des brevets**

(19)

(11) Numéro de publication: **0 193 452**

**B1**

(12) ## FASCICULE DE BREVET EUROPÉEN

(45) Date de publication du fascicule du brevet: **04.10.89**

(51) Int. Cl.⁴: **B 60 C 23/00**

(21) Numéro de dépôt: **86400325.6**

(22) Date de dépôt: **17.02.86**

(54) **Dispositif de dégonflage pour pneumatiques de véhicules.**

(30) Priorité: **18.02.85 FR 8502296**
**03.09.85 FR 8513059**

(43) Date de publication de la demande:
**03.09.86 Bulletin 86/36**

(45) Mention de la délivrance du brevet:
**04.10.89 Bulletin 89/40**

(84) Etats contractants désignés:
**DE GB IT**

(56) Documents cité:
**EP-A-0 042 790**
**EP-A-0 071 278**
**EP-A-0 137 932**
**DE-A-3 213 552**
**FR-A-1 247 604**
**FR-A-2 507 971**
**GB-A-1 031 095**

(73) Titulaire: **LABINAL, 5 Avenue Newton, F-78180 Montigny le Bretonneux (FR)**

(72) Inventeur: **Le Chatelier, Robert, 117 rue de l'Abbé Groult, F-75015 Paris (FR)**
Inventeur: **Sinic, André, 10 avenue de la Porte de Menilmontant, F-75020 Paris (FR)**
Inventeur: **Diefenbach, Jean-Jacques, 4 rue de Bellevue, F-95110 Sannois (FR)**

(74) Mandataire: **Lemoine, Michel, Cabinet Michel Lemoine 13 Boulevard des Batignolles, F-75008 Paris (FR)**

EP 0 193 452 B1

## Description

La présente invention a trait à un dispositif de dégonflage pour pneumatiques de véhicules et notamment de véhicules d'intervention rapide tels que, par exemple, les véhicules de pompiers d'aéroports ou véhicules militaires.

Certains véhicules d'intervention rapide, et notamment les véhicules de pompiers d'aéroports ou les véhicules militaires, doivent pouvoir se déplacer très rapidement sur des terrains dépourvus de revêtement de roulage, ou des terrains enneigés. Ces véhicules doivent donc pouvoir passer très rapidement d'un état de gonflage normal des roues, adapté au roulage de routine sur des pistes, à un état de sous-gonflage dans lequel la pression des pneumatiques est adaptée au roulage sur le terrain environnant qui peut être, suivant le cas, du sable, de la neige, de la glace, de la boue etc. Dans d'autres cas, des véhicules circulant notamment sur route, et dont la pression des pneumatiques est donc adaptée à cette circulation, doivent pouvoir passer rapidement sur le terrain environnant et s'y déplacer à grande vitesse, ce qui nécessite également que l'on réduise rapidement la pression régnant dans les pneumatiques à une valeur plus basse. On connaît déjà des dispositifs de dégonflage pour des véhicules de ce genre, permettant généralement également le gonflage, et utilisant des conduits reliant le châssis du véhicule aux roues par l'intermédiaire de joints tournants. Dans de nombreux cas, et notamment dans les véhicules de pompiers d'aéroports, ces dispositifs de dégonflage actuellement connus demandent, pour assurer le dégonflage à la valeur voulue, un laps de temps sans (commune mesure avec les impératifs de la mission.

On connaît déjà par le brevet britannique GB-A-1 031 095, un dispositif de gonflage et de dégonflage de pneumatiques de véhicules tels que des avions, avec, sur la roue, un passage susceptible d'être obturé par une vanne à commande électromagnétique, un clapet pressostatique étant situé en aval et dans l'axe du passage. La vanne électromagnétique est repoussée en position ouverte par un ressort et est amenée et maintenue en position fermée lorsque le bobinage électromagnétique correspondant est alimenté par le biais d'un collecteur à balais. En fait, un tel dispositif forme deux vannes en série, la seconde étant un clapet de type pressostatique. Un tel dispositif, en raison de la présence notamment du clapet pressostatique, ne peut être adapté au dégonflage rapide de roues ayant un très grand volume de pneumatique tel que des roues de véhicule d'intervention. En outre, cette construction est impropre à une mesure précise de pression, par exemple par des moyens tels que décrits dans la demande de brevet EP-A-0 042 790 qui décrit un capteur de pression montée sur pneumatique et agencé pour transmettre un signal électrique correspondant par le biais d'un transmetteur tournant.

La présente invention se propose de remédier ces inconvénients et de fournir un dispositif de dégonflage de pneumatiques de véhicules, et notamment de véhicules d'intervention rapide ou de véhicules militaires, qui permette d'assurer le dégonflage des roues en un laps de temps nettement inférieur au laps de temps des dispositifs connus, de l'ordre de 15 sec/Nm³ entre 3 bars et 1 bar (relatif).

Un autre objectif de l'invention est de réaliser un tel dispositif qui soit capable d'assurer le dégonflage des pneumatiques du véhicule pendant que celui-ci est en cours de déplacement.

Un autre objectif de l'invention est de fournir un tel dispositif de dégonflage qui soit extrêmement fiable et ne présente qu'un risque pratiquement nul de panne, et ceci dans un environnement difficile, qu'il s'agisse aussi bien de températures très basses régnant dans des régions polaires que de températures très élevées régnant dans des régions arides. En outre, le dispositif doit être insensible aux autres conditions d'environnement tel les que pluie, neige, glace, poussière, boue etc.

Un autre objectif encore de l'invention est de réaliser un tel dispositif qui puisse être perfectionné pour permettre également un gonflage des roues du véhicule.

L'invention a pour objet un dispositif de dégonflage de roues de véhicules, notamment de véhicules d'intervention rapide ou de véhicules militaires, destiné à permettre, à l'aide d'une commande centralisée, un dégonflage extrêmement rapide des pneumatiques des roues du véhicule en marche, et comprenant, sur chaque roue comportant un pneumatique à dégonfler, des moyens de vanne à commande électrique et un élément sensible à la pression basse prédéterminée destinée à être atteinte à la fin du dégonflage pour une fermeture de ces moyens de vanne, caractérisé en ce qu'il comporte, sur chacune desdites roues, une servovanne à forte section de passage susceptible de mettre instantanément le pneumatique en communication avec l'air libre, un capteur de pression situé à l'écart du passage de la servovanne et auquel est associé un circuit électrique de capteur, une électrovanne de la servovanne pour commander son fonctionnement, et un organe de couplage électromagnétique constitué par un transmetteur tournant dont le primaire, fixe par rapport au châssis du véhicule, est alimenté à partir d'une source de courant et dont le secondaire, solidaire de la roue et tournant sans contact en face du primaire, est relié d'une part à l'électrovanne pour commander l'ouverture de la servovanne, et d'autre part au circuit de capteur, ce dernier étant également relié à l'électrovanne de façon que, lorsque la pression détectée par le capteur atteint ladite valeur basse prédéterminée, il commande la fermeture de la servovanne.

Dans un mode de mise en oeuvre préféré de l'invention, la source de courant électrique adresse au primaire de chaque transmetteur tournant un courant continu haché ou "rupté", permettant ainsi le passage dans le secondaire d'une puissance importante qui peut être de l'ordre de quelques dizaines de watts, ce qui permet d'assurer une commande efficace, sûre et rapide de l'électrovanne, ainsi qu'une alimentation suffisante du circuit associé au capteur devenu sensible à la pression.

La fréquence du courant haché ou rupté est choisie afin d'être compatible avec l'environnement électrique ou électromagnétique, et notamment hertzien, dans lequel le véhicule peut être amené à opérer.

De préférence, la commande de l'alimentation en courant est réalisée par l'intermédiaire d'un calculateur destiné à adresser le courant simultanément aux différents éléments primaires des transmetteurs tournants qui assurent le couplage au niveau des différentes roues du véhicule.

Selon un perfectionnement de l'invention, le dispositif peut également être utilisé pour assurer le gonflage des pneumatiques du véhicule, et notamment le gonflage pendant la marche, et dans ce cas on prévoit sur le véhicule une source d'air ou de gaz comprimé, des électrovannes de distribution pilotées par un calculateur pour adresser la pression aux différentes roues par l'intermédiaire chaque fois de joints tournants qui ne sont mis sous pression que pendant l'opération de gonflage, lesdits joints tournants aboutissant à la servovanne de chaque pneumatique, laquelle est alors conçue, d'une façon en soi connue, pour pouvoir assurer, en fonction d'instructions de commande transitant par le dispositif de couplage électromagnétique, le dégonflage ou le gonflage.

De préférence, la servovanne, qui présente un large passage pour le dégonflage, passage susceptible d'être obturé par un clapet, utilise la pression existant dans le pneumatique qu'elle dessert pour assurer une assistance à l'ouverture. Elle comporte dans ce cas un passage auxiliaire relié au pneumatique et obturé par un clapet auxiliaire, susceptible d'être ouvert par l'électrovanne pour adresser alors la pression sur un organe moteur tel qu'une membrane de grande surface, susceptible d'ouvrir le clapet principal.

Dans une forme de réalisation particulièrement préférée, la servovanne est dépourvue de tout piston ou coulisseau usuel et comporte des membranes qui assurent les mouvements moteurs et servent au guidage des parties mobiles et notamment du ou des clapets.

De façon avantageuse le dispositif, comprenant le transformateur tournant possédant un primaire et un secondaire séparés par un entrefer, portés l'un par la partie fixe du véhicule et l'autre par la roue et disposés au regard l'un de l'autre, est caractérisé en ce que le primaire et le secondaire se trouvent disposés entre deux roulements de roue.

Les roulements peuvent avantageusement être les roulements interposés entre une fusée et la jante coaxiale de la roue.

De préférence, et selon un perfectionnement de l'invention, notamment dans le cas où le dispositif est associé à des moyens de gonflage et/ou de dégonflage utilisant un passage d'air par joint tournant, le transformateur tournant du dispositif de l'invention est interposé entre deux joints tournants, eux-mêmes disposés entre les roulements.

L'invention permet ainsi non seulement d'obtenir un diamètre de transformateur tournant aussi faible que possible, puisque le transformateur est disposé au niveau du plus petit rayon de l'interface entre la partie fixe et la partie rotative de la roue, ainsi qu'une stabilité et une précision maximales d'entrefer dues au voisinage immédiat de deux roulements disposés de part et d'autre, mais encore une protection totale contre les agressions mécaniques et une protection importante contre les risques de souillure.

Le dispositif selon l'invention permet également de maintenir le transformateur tournant soit dans un environnement d'air ou de gaz, soit dans un environnement d'huile.

De façon avantageuse, le dispositif peut être conçu pour que le transmetteur tournant transmette à la partie fixe les informations relatives à la pression, des moyens, tels que, par exemple, une calculatrice, étant prévus, de préférence sur la partie fixe, pour piloter le dégonflage et/ou le gonflage du pneumatique. En d'autres termes, le circuit électronique associé au capteur de pression, et qui comporte, sur la roue, des moyens de mise en forme des signaux du capteur, comporte une partie portée de préférence par la partie fixe ou châssis du véhicule pour piloter le dégonflage et/ou le gonflage en utilisant les signaux de pression provenant du capteur.

On peut ainsi obtenir plusieurs valeurs différentes de dégonflage et/ou de gonflage avec une grande précision.

De préférence, des signaux de pression sont transférés depuis le secondaire ou le primaire, pendant les intervalles de temps séparant les impulsions successives de courant haché ou rupté.

D'autres avantages et caractéristiques de l'invention apparaîtront à la lecture de la description suivante faite à titre d'exemple non limitatif et se référant au dessin annexé dans lequel:

La figure 1 représente une vue schématique d'un dispositif selon l'invention.

La figure 2 représente une vue en coupe du montage du dispositif au niveau d'une roue.

La figure 3 représente une vue en coupe d'une servovanne de ce dispositif.

La figure 4 représente une vue en coupe axiale d'un dispositif selon un perfectionnement de l'invention au niveau de la roue avec une servovanne montée sur la partie rotative de la roue.

La figure 5 représente une vue schématique du dispositif selon la figure 4.

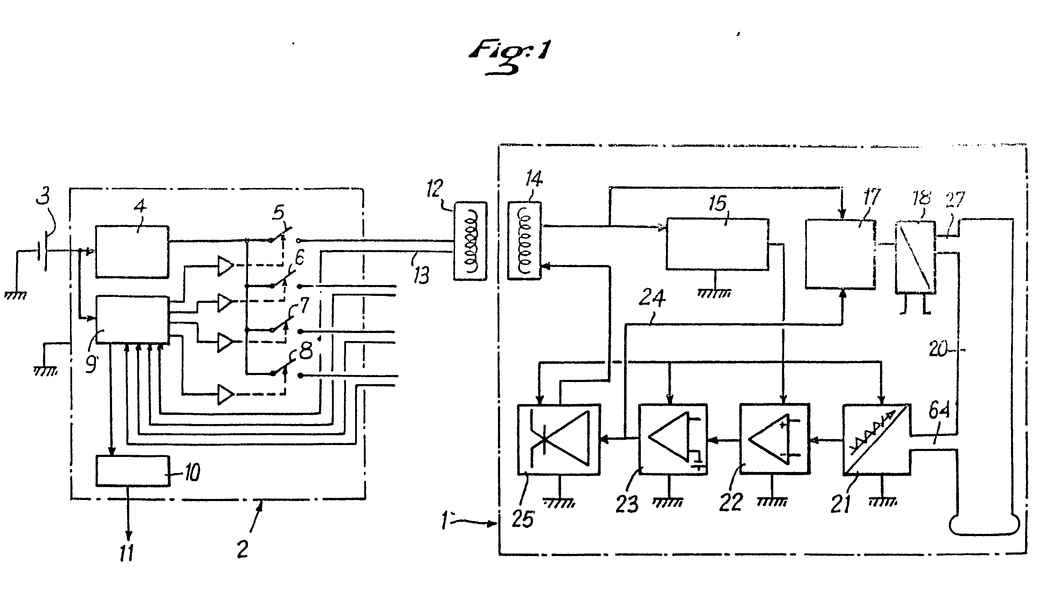

On se réfère tout d'abord à la figure 1.

Le dispositif selon l'invention présente une partie mobile, portée par une roue et désignée dans son ensemble par 1, et une partie fixe commune à chaque partie 1 de roue. La partie fixe comporte un dispositif de commande désigné dans son ensemble par 2 et alimenté par une source de courant continu 3, par exemple la batterie 12 V du véhicule. Cette source alimente un dispositif d'alimentation 4 qui comporte un convertisseur continu/continu.

Ce courant est rupté à la fréquence idoine et adressé par le dispositif à un ensemble d'interrupteurs 5, 6, 7, 8 qui desservent chacun l'une des roues. Ce dispositif d'alimentation est piloté par un dispositif logique de commande et de contrôle 9, ci-après dénommé calculateur, qui est relié, par l'intermédiaire d'une interface classique 10, à un bus 11 aboutissant à un panneau de commande actionné par le pilote du véhicule. Le calculateur 9, en fonction des commandes du pilote, est capable d'actionner un, plusieurs ou la totalité des interrupteurs 5, 6, 7, 8 pour assurer le dégonflage des pneumatiques des roues correspondantes.

Chacun des interrupteurs précités commande l'alimentation d'un bobinage primaire 12 de transmetteur tournant attribué à la roue correspondante. Un circuit 13 permet de retourner au calculateur des informations, de préférence sous forme d'un signal modulé en fréquence, en provenance de la partie mobile 1. De tels moyens ont été représentés par exemple dans la demande de brevet français n° 8 027 676 déposée par la déposante le 29 décembre 1980 et l'on pourra se reporter à cette demande pour des détails de réalisation. Ce signal modulé en fréquence permet au calculateur de connaître à tout instant la pression régnant à l'intérieur du pneu.

Ce circuit de détection 13 peut cependant être omis dans une version simplifiée du dispositif selon l'invention.

Le primaire fixe 12 du transmetteur tournant est diposé au regard du secondaire 14 monté rotatif sur l'ensemble de roue 1 pour assurer un couplage électromagnétique délivrant à l'ensemble 1 des impulsions à la fréquence idoine, le dispositif étant facilement susceptible ainsi de transmettre à la partie 1 une puissance de plusieurs dizaines de watts.

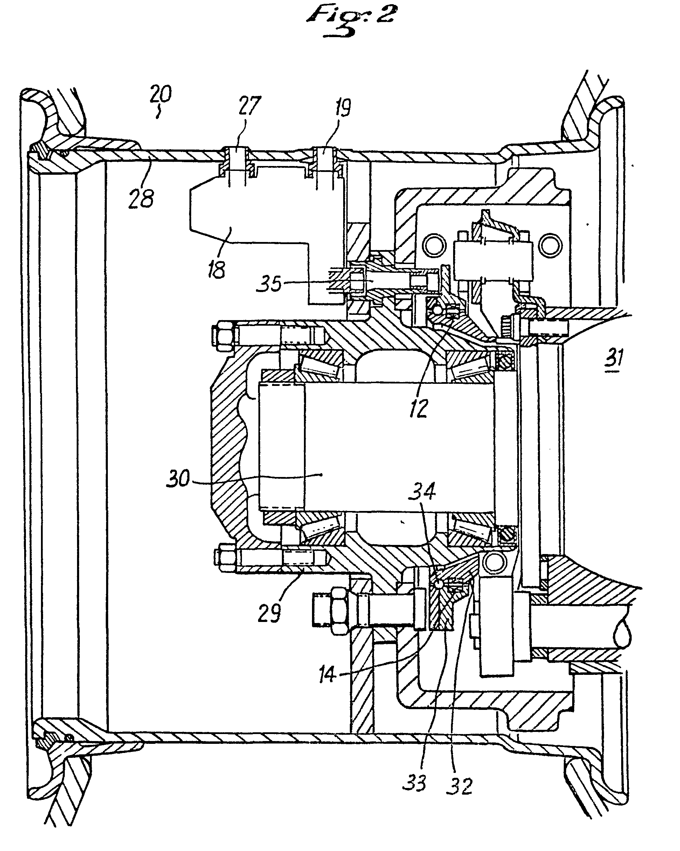

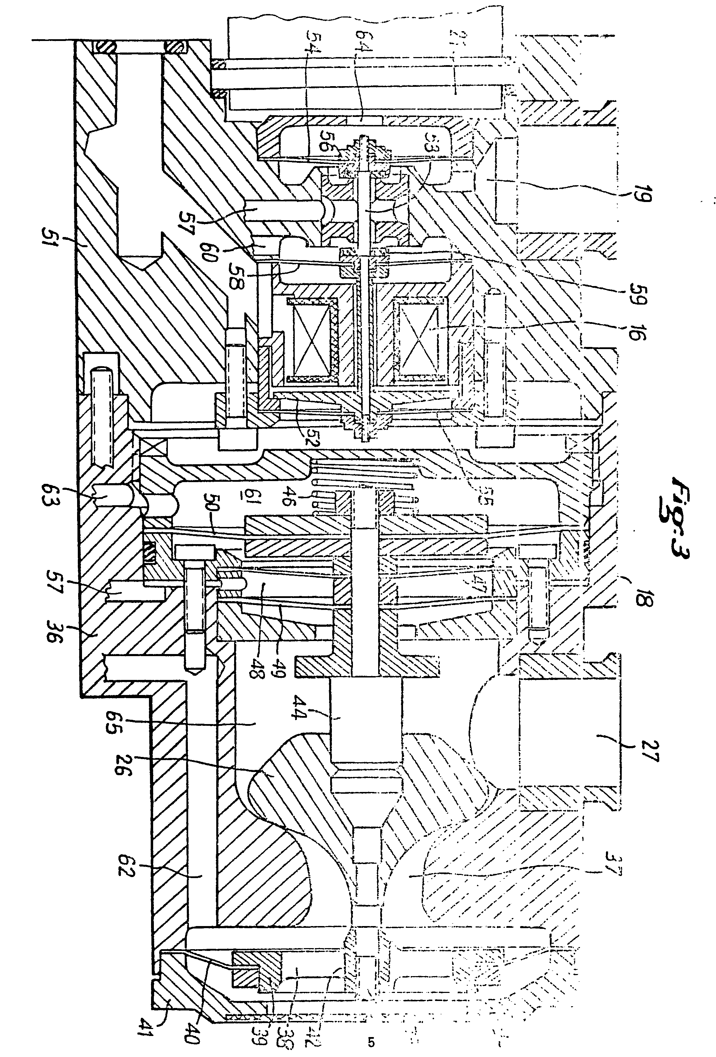

Le secondaire 14 alimente un circuit d'alimentation stabilisé 15 permettant de délivrer une tension stabilisée continue. Simultanément le secondaire 14 alimente le bobinage ou dispositif de commande 16 (voir la figure 3) de l'électrovanne 17 faisant partie de la servovanne 18 et qui se trouve en communication, par un passage 19 normalement obturé par un clapet, avec l'intérieur du pneumatique 20 (voir la figure 2).

Le pneumatique 20 est également en communication par un passage 64 avec un capteur de pression 21 susceptible de fournir une tension continue variable en fonction de la valeur de la pression. Le capteur 21 transmet cette information à un amplificateur 22 dont la sortie aboutit à l'une des entrées d'un détecteur de pression minimale réalisé sous la forme classique d'un comparateur 23. Tant que la pression détectée par le capteur 21 est supérieure à la valeur minimale affichée dans le comparateur 23, et qui est égale à la valeur de la pression résiduelle désirée dans le pneumatique 20 à la fin du dégonflage, le comparateur n'émet aucun signal à sa sortie pendant la phase de dégonflage. Lorsque la pression dans le pneumatique 20 atteint cette valeur inférieure, le comparateur émet un signal qui est adressé par une ligne 24 à l'organe de commande 16 de l'électrovanne 17 pour provoquer sa fermeture même si le courant tendant à provoquer son ouverture lui parvient encore depuis le secondaire 14. Le signal émis par le comparateur 23 est également adressé à un circuit d'indication de dégonflage 25, qui, lorsqu'il est actionné, adresse au secondaire 14 un signal ayant une fréquence déterminée comprise, par exemple, entre 50 kHz et 100 kHz.

Ce signal est transmis, par couplage électromagnétique, au primaire 12 puis, par le circuit 13 et des filtres convenables, au calculateur 9 de la partie de commande et de contrôle 2. De plus le passage hors gamme, de la fréquence comprise entre 50 et 100 kHz, par valeur supérieure ou inférieure, permet de détecter par l'intermédiaire du calculateur les anomalies éventuelles de la partie mobile.

Ces différents éléments 21, 22, 23 et 25 sont alimentés par le dispositif d'alimentation stabilisé 15.

Le fonctionnement est alors le suivant: les différents pneumatiques étant supposés gonflés à leur valeur normale, adaptée au roulage sur surface dure ou sur route, le pilote souhaite provoquer le dégonflage d'une ou plusieurs roues jusqu'à la valeur limite inférieure choisie. Il commande alors le calculateur 9 qui provoque l'actionnement du ou des relais correspondants à la ou aux roues choisies et alimentant le primaire 12 de roue. Le signal de puissance est recueilli par le secondaire lu qui l'adresse au dispositif d'alimentation stabilisée 15 et au dispositif de commande 16 de l'électrovanne 17, provoquant instantanément l'ouverture de cette dernière, ce qui provoque l'ouverture du clapet 26 de la servovanne 18 et donc la liaison pneumatique - air libre par le passage de grande section 27, entraînant le dégonflage. L'ouverture reste maintenue jusqu'à ce que la pression détectée par le capteur 21 ait atteint la valeur limite inférieure affichée à l'avance sur le comparateur 23, ce qui provoque la fermeture de l'électrovanne 17, donc de la servovanne 18, et l'envoi de l'information correspondante de fermeture par l'intermédiaire du circuit 25 à l'ensemble de commande fixe 2. Le pilote est ainsi informé que la valeur limite a été atteinte et que la servovanne est fermée.

En se référant à la figure 2, on voit une forme de réalisation dans laquelle une roue, comprenant une jante 28 avec le pneumatique 20, est montée par son moyeu 29 sur l'axe de roue 30 porté par le bloc rotule de direction 31. Une bague fixe 32 porte le bobinage primaire 12 d'un transmetteur tournant. Une seconde bague rotative 33, solidaire cette fois-ci du moyeu 29, porte le bobinage secondaire 14, en étant exactement positionnée par rapport à la bague 32, grâce à un roulement intermédiaire 34. Les conducteurs sortant de l'enroulement secondaire 14 passent, par l'intermédiaire d'un écrou creux 35, vers la servovanne 18 comportant, dans un boîtier convenablement conformé, l'électrovanne 17 avec son organe de commande 16 ainsi que les différents autres éléments de la partie rotative, 21, 22, 23, 24 et 25.

En se référant à la figure 3, on voit que la servovanne 18 comporte un boîtier 36 muni du passage de grand diamètre 27 possédant, vers l'intérieur du pneumatique, une forme courbée 37 ayant également un grand diamètre et normalement obturé par le clapet 26 dont la forme incurvée complète, lorsque le clapet est dans sa position ouverte, le passage 27 avec un profil de clapet permettant l'évacuation rapide de l'air, du pneumatique à l'atmosphère, à travers les jours 38 d'un dispositif 39 maintenu en place par une membrane en forme de bague 40 immobilisée contre le boîtier 36 par une bague 41, des rayons radiaux maintenant une portée centrale 42 recevant et guidant l'extrémité 43 de la tige 44 du clapet 26. Une grille de protection à larges mailles 45 permet le passage rapide de l'air sous pression vers l'atmosphère tout en protégeant le dispositif des impuretés extérieures. La tige 44 est normalement repoussée à sa position d'obturation, représentée sur le dessin, par un ressort 46. Une membrane métallique ajourée 47, solidaire de la tige 44 et reliée au boîtier à sa périphérie, assure le bon alignement de l'axe 44. Une chambre 48 est donc délimitée à son extrémité postérieure par une membrane 49 et à son extrémité antérieure par une seconde membrane 50. Lorsque l'on adresse, par un passage convenable, de l'air sous pression en provenance de l'intérieur du pneumatique à la chambre 48, la membrane 50 est repoussée à l'encontre du ressort 46 et provoque le déplacement de la tige 44 et donc l'ouverture du clapet 26.

La partie commande 17 de la servovanne, située dans un boîtier 51, est également reliée à l'intérieur du pneumatique par le passage 19. Cette partie comporte un bobinage 16 susceptible d'agir sur un flasque magnétique 52 de façon à repousser une tige 53 portée et guidée par deux membranes métalliques ajourées su et 55. La tige porte, au voisinage de la membrane 54, un clapet 56 qui ferme normalement le passage entre le conduit 19 et un conduit 57 aboutissant dans la chambre 48. La tige porte, au niveau d'une membrane d'étanchéité intermédiaire 58, un autre clapet 59 qui obture un passage 60 permettant, dans la position normale inactive représentée sur la figure, de mettre le conduit 57 et donc la chambre 48 à l'air libre par un échappement convenable 62.

En parallèle, ce conduit 60 est en liaison avec la chambre 61 du ressort 46 va le conduit 63, afin de reconduire la pression de la chambre 48 dans la chambre 61 et annihiler l'action du fluide du pneumatique dans la chambre 48 sur la membrane 47 dans l'éventualité d'une obstruction par la boue, la glace, la neige etc... de l'orifice de purge 62.

On voit d'autre part que le capteur de pression 21 est relié à l'intérieur du pneumatique par un passage 64 débouchant dans le passage 19, de sorte qu'il est éloigné du flux de dégonflage et peut donc fournir une mesure exacte instantanée de la pression dans ce pneumatique en cours de dégonflage, et donc provoquer l'arrêt immédiat du dégonflage lorsque la valeur basse a été atteinte.

L'électrovanne telle qu'elle est réalisée, avec un passage 27 ayant un diamètre de 15 mm, permet d'assurer, grâce aux moyens de commande selon l'invention, et ceci avec une fiabilité parfaite, le dégonflage d'un pneumatique 19 ayant une contenance de 500 litres, gonflé initialement à une valeur de 3 bars, jusqu'à une valeur limite de dégonflage de 1 bar, et ceci en 15 secondes environ.

L'invention peut bien entendu faire l'objet de nombreuses variantes. En particulier, on peut adjoindre à ce dispositif un dispositif de gonflage aboutissant dans la chambre 65 formée par le passage 27, par l'intermédiaire de joints tournants, tels que décrits par exemple dans la demande de brevet français n° 8 411 781 de la déposante et déposée le 25 juillet 1984 et utilisant pour la commande les mêmes moyens de détection de pression, et notamment le capteur 21, et, pour la transmission, les mêmes moyens de couplage 12, 14.

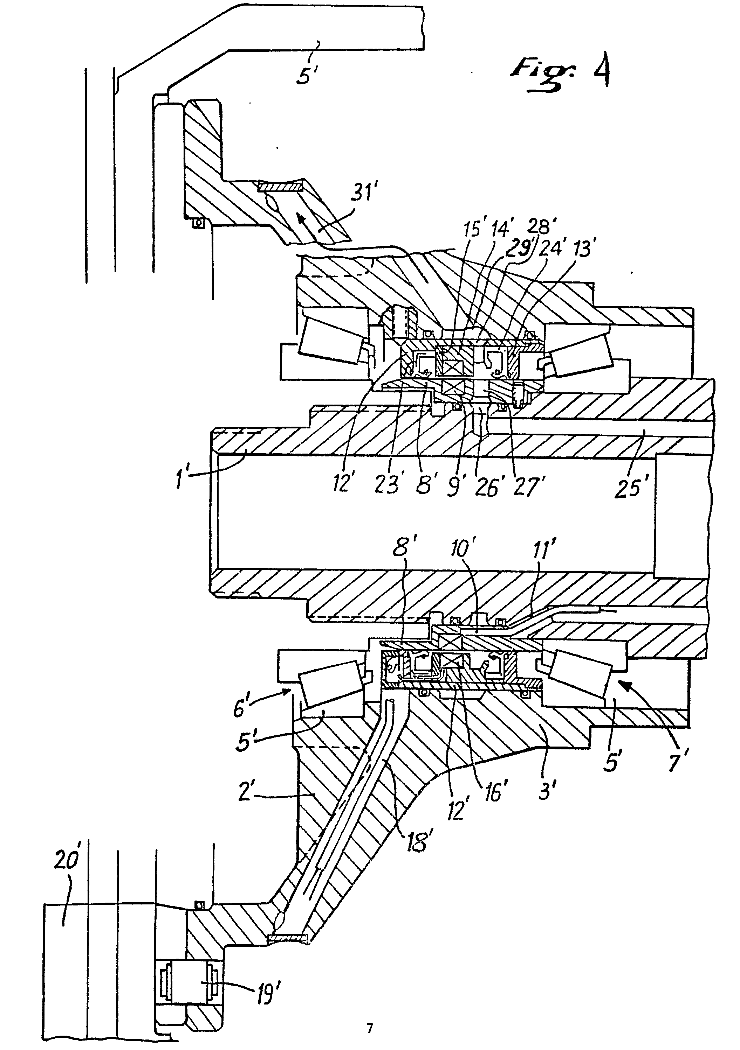

On se réfère à la figure 4.

La partie fixe d'un véhicule présente une fusée 1', solidaire d'un châssis et une roue 2' comprenant un moyeu 3' avec un disque, et une jante 5' sur laquelle est monté un pneumatique (non représenté). Entre le moyeu et la fusée sont interposés deux roulements à rouleaux usuels 6', 7' dont les chemins sont calés respectivement sur la fusée et sur le moyeu, et ceci d'une façon usuelle. Le moyeu présente, de façon usuelle, une partie médiane de plus petit diamètre intérieur formant, de chaque côté, un épaulement axial pour les chemins de roulement de moyeu des roulements 6' et 7'.

La fusée 1' est entourée, au regard de la partie médiane précitée, d'une pièce 8' en forme de manchon, présentant une gorge périphérique dans laquelle est disposé l'enroulement primaire 9' d'un transformateur tournant. Comme on le voit sur la partie supérieure de la figure, la pièce 8' présente des perçages 10' qui réalisent un passage en communication avec un perçage 11' pratiqué dans la fusée, le conduit ainsi réalisé permettant le passage des conducteurs électriques aboutissant au primaire 9'.

En face de la pièce 8' se trouve disposée une pièce 12', en forme de L, calée contre une pièce 13' maintenue en place par l'un des deux chemins de roulement solidaires du moyeu 3'. Entre les pièces 12' et 13' sont calées deux pièces ferromagnétiques 14', 15' qui forment, lorsqu'elles sont réunies, une gorge interne occupée par le secondaire 16' du transformateur tournant. Un perçage dans la pièce 12' forme un passage en communication avec des perçages 18' du moyeu pour constituer un conduit permettant le passage des conducteurs électriques qui sont reliés, par l'intermédiaire d'un connecteur coaxial schématiquement représenté en 19', à l'électronique de roue disposée dans un logement annulaire 20'. Le logement 20' comporte encore une servovanne avec une électrovanne de commande. Enfin, dans le boîtier 20' se trouvent contenus les moyens électroniques associés à un capteur de pression.

Entre les pièces 12' et 15', respectivement 13' et 14', sont serrés les corps de deux joints d'étanchéité 23', 24' dont les lèvres coopèrent avec la surface lisse de la pièce 8'. Comme on le voit, ces joints, d'un type usuel, présentent une partie en contact avec la surface de la pièce 8', une partie radiale s'étendant, pour le joint 23', au contact de l'aile radiale de la pièce 12' et, pour le joint 24', le long de l'aile radiale de la pièce 13'. Enfin une semelle périphérique des joints s'appuie contre les parties horizontales correspondantes de la pièce 12'. On voit par ailleurs que les ailes radiales des pièces 12' et 13' s'étendent jusqu'au voisinage de la surface cylindrique de la pièce 8' dont elles sont séparées par un faible intervalle dont l'épaisseur est de préférence de l'ordre de 3/10èmes de millimètre. Ces pièces ont pour but de guider le moyeu lors de son montage sur la fusée de façon que les joints ne puissent être endommagés.

Les faces centrifuges des pièces 15' et 14', qui délimitent l'entrefer avec la pièce ferro-magnétique 8', sont éloignées de celles-ci d'une distance de l'ordre de 5/10èmes de millimètre, ce qui constitue l'entrefer.

Les ressorts circulaires placés sur les joints 23', 24' tendent à appliquer ceux-ci contre la surface cylindrique de la pièce 8' d'une façon suffisante pour assurer l'étanchéité à l'huile de sorte que l'huile ou la graisse en provenance des roulements n'est pas à même de parvenir dans l'espace délimité entre les joints 23', 24'. Le fluide ou l'air sous pression destiné au pneumatique, en provenance d'une source ou d'un compresseur porté par le châssis du véhicule, passe par une canalisation 25' constituée par des perçages pratiqués dans la fusée 1', et un perçage radial 26' pratiqué dans la pièce 8' et communiquant avec une gorge interne 27' de celle-ci. De là, l'air passe par des passages 28' pratiqués dans la pièce 13', aboutissant à une gorge périphérique 29' en communication avec un passage 30' de la pièce 12' puis avec des passages 31' du moyeu et de la roue pour parvenir à la servovanne de gonflage de pneumatique.

Enfin, des passages d'huile (non représentés) permettent la circulation d'huile pour la lubrification des roulements.

Grâce à la parfaite protection qui est ainsi réalisée, le transformateur tournant 9', 16', peut être réalisé de façon très élaborée.

Lorsque aucune pression de fluide n'est adressée à la canalisation 25', les lèvres des joints 23', 24' ne sont sollicitées que par leurs ressorts et se contentent d'assurer l'étanchéité à l'huile. En conséquence, il n'y a pratiquement pas d'usure des lèvres du fait de la rotation par rapport à la pièce 8'. Par contre, si l'on établit la pression dans le conduit de fluide pour le gonflage du pneumatique, les lèvres sont repoussées sous l'effet de la pression et viennent coopérer avec la surface périphérique de la pièce 8' pour assurer l'étanchéité à l'air. Le transformateur tournant bénéficie de la protection, d'une part, des joints 23', 24', et d'autre part, des roulements 6', 7' et ne risque pas d'agression mécanique. Les joints contribuent à assurer une protection supplémentaire contre les risques d'encrassement, notamment au niveau de l'entrefer. En outre, on comprend que les primaire et secondaire du transformateur tournant, qui sont au contact de pièces métalliques importantes et dans un environnement d'huile, sont convenablement refroidis, ce qui permet le passage d'une quantité importante d'énergie si on le désire.

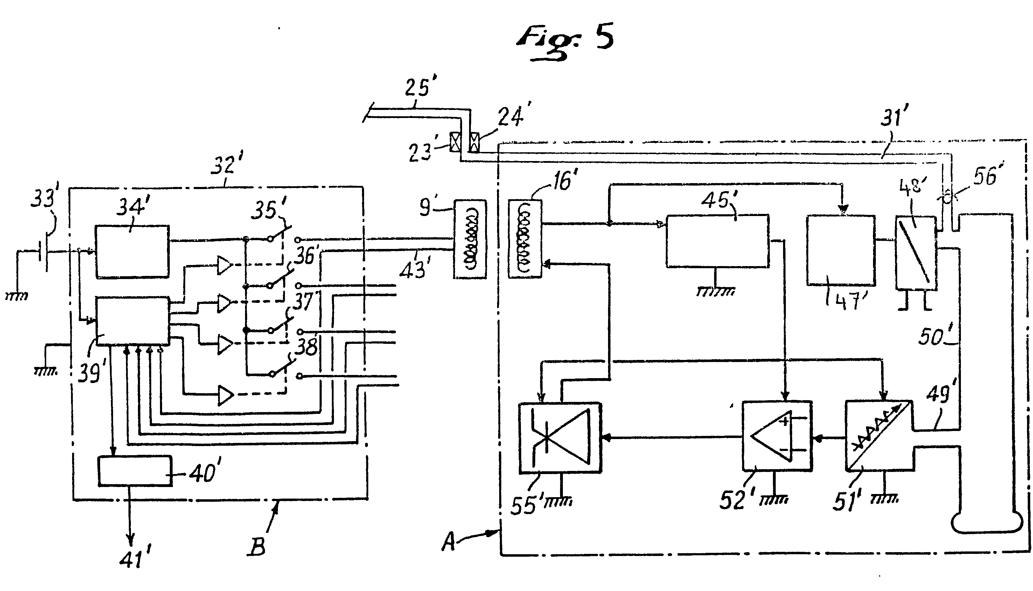

On se réfère plus particulièrement à la figure 5.

Le dispositif présente une partie mobile A portée par la roue et une partie fixe B commune à chaque partie de roue. La partie fixe comporte un dispositif de commande désigné dans son ensemble par 32' et alimenté par une source de courant continu 33', par exemple la batterie 12 V ou 24 V du véhicule. Cette source alimente un dispositif d'alimentation 34' qui comporte un convertisseur continu/continu. Ce courant est rupté à la fréquence idoine et adressé par le dispositif à un ensemble d'interrupteurs 35', 36', 37' et 38' qui desservent chacun l'une des roues. Ce dispositif d'alimentation est piloté par un dispositif logique de commande et de contrôle 39', ci-après dénommé calculateur, qui est relié par l'intermédiaire d'une interface classique 40' à un bus 41' aboutissant à un panneau de commande actionné par le pilote du véhicule. Le calculateur 39', en fonction des commandes du pilote, est capable d'actionner un, plusieurs ou la totalité des interrupteurs 35', 36', 37' et 38 en fonction des instructions à envoyer, pour le dégonflage des pneumatiques des roues.

Chacun des interrupteurs précités commande l'alimentation d'un bobinage primaire 9' de transmetteur tournant attribué à la roue correspondante. Un circuit 43' permet de retourner au calculateur des informations, de préférence sous forme d'un signal modulé en fréquence, en provenance de la partie mobile A. De tels moyens ont été représentés par exemple dans la demande de brevet français n° 8 027 676 déposée par la déposante le 29 décembre 1980 et l'on pourra se reporter à cette demande pour les détails de réalisation. Ce signal modulé en fréquence permet au calculateur de connaître à tout instant la pression régnant à l'intérieur du pneu.

Ce circuit de détection 43' peut cependant être omis dans une version simplifiée du dispositif selon l'invention.

Le primaire fixe 9' du transmetteur tournant est disposé au regard du secondaire 16' monté rotatif sur l'ensemble de roue A pour assurer un couplage électromagnétique délivrant à l'ensemble A des impulsions à la fréquence idoine, le dispositif étant facilement susceptible ainsi de transmettre à la partie A une puissance de plusieurs dizaines de watts.

Le secondaire 16' alimente un circuit d'alimentation stabilisé 45' permettant de délivrer une tension stabilisée continue. Simultanément, le secondaire 16' alimente le bobinage ou dispositif de commande de l'électrovanne 47' faisant partie de la servovanne 48' et qui se trouve en communication, par un passage normalement obturé par un clapet, avec l'intérieur du pneumatique 50'.

Le pneumatique 50' est également en communication par un passage 49' avec un capteur de pression 51' susceptible de fournir une tension continue va riable en fonction de la valeur de la pression. Le capteur 51' transmet cette information à un amplificateur 52' dont la sortie aboutit à un circuit d'indication de pression 55', qui, lorsqu'il est actionné, adresse au secondaire 16' un signal ayant une fréquence déterminée comprise, par exemple, entre 50 kHz et 100 kHz.

Ce signal est transmis, par couplage électromagnétique, au primaire 9' puis, par le circuit 43' et des filtres convenables, au calculateur 39' de la partie de commande et de contrôle B. De plus, le passage hors gamme, de la fréquence comprise entre 50 et 100 kHz, par valeur supérieure ou inférieure, permet de détecter par l'intermédiaire du calculateur les anomalies éventuelles de la partie mobile.

Ces différents éléments 51', 52' et 55' sont alimentés par le dispositif d'alimentation stabilisé 45'.

Le fonctionnement est alors le suivant les différents pneumatiques étant supposés gonflés à leur valeur normale, adaptée au roulage sur surface dure ou sur route, le pilote souhaite provoquer le dégonflage d'une ou plusieurs roues jusqu'à la valeur limite inférieure choisie. Il commande alors le calculateur 39' qui provoque l'actionnement du ou des relais correspondant à la ou aux roues choisies et alimentant le primaire 9' de roue. Le signal de puissance est recueilli par le secondaire 16' qui l'adresse au dispositif d'alimentation stabilisée 35 et au dispositif de commande 47' de l'électrovanne 48', provoquant instantanément l'ouverture de cette dernière, ce qui provoque l'ouverture du clapet de la servovanne 48' et donc la liaison pneumatique - air libre par un échappement de grande section. L'ouverture reste maintenue jusqu'à ce que la pression détectée par le capteur 51' ait atteint une valeur limite inférieure affichée à l'avance dans le calculateur 39', ce qui provoque la fermeture de l'électrovanne 47', donc de la servovanne 48'. Le pilote est également informé que la valeur limite a été atteinte et que la servovanne est fermée.

Pour le gonflage, on relie, par un distributeur approprié (non représenté) d'un type classique, le passage 25' à une source de pression, telle que par exemple un compresseur monté sur le véhicule. La pression qui s'établit ainsi dans le passage 31' est adressée à l'intérieur du pneumatique 50' par l'intermédiaire d'un simple clapet antiretour 56', qui peut avantageusement être monté également dans le corps de la servovanne 48' pour communiquer avec le pneumatique 50'. Pendant cette opération de gonflage, la valeur de la pression est adressée, comme précédemment, au moyen de calcul 39' qui provoque au bon moment, par l'intermédiaire du distributeur (non représenté), la cessation de l'envoi de la pression dans le passage 25' et, par conséquent, l'arrêt du gonflage à la valeur désirée affichée dans le calculateur 39'.

**Revendications**

1. Dispositif de dégonflage de roues de véhicules, notamment de véhicules d'intervention rapide ou de véhicules militaires, destiné à permettre, à l'aide d'une commande centralisée, un dégonflage extrêmement rapide des pneumatiques (20) des roues du véhicule en marche, et comprenant, sur chaque roue comportant un pneumatique (20) à dégonfler, des moyens de vanne à commande électrique (17, 18) et un élément (21) sensible à la pression basse prédéterminée destinée à être atteinte à la fin du dégonflage pour une fermeture de ces moyens de vanne, caractérisé en ce qu'il comporte, sur chacune desdites roues, une servovanne (18) à forte section de passage (27, 37) susceptible de mettre instantanément le pneumatique (20) en communication avec l'air libre, un capteur de pression (21) situé à l'écart du passage de la servovanne (18) et auquel est associé un circuit électrique de capteur (22, 23, 24), une électrovanne (17) de la servovanne (18) pour commander son fonctionnement, et un organe de couplage électromagnétique constitué par un transmetteur tournant dont le primaire (12), fixe par rapport au châssis du véhicule, est alimenté à partir d'une source de courant et dont le secondaire (14), solidaire de la roue et tournant sans contact en face du primaire (12), est relié d'une part à l'électrovanne (17) pour commander l'ouverture de la servovanne (18), et d'autre part au circuit de capteur (22, 23, 24), ce dernier étant également relié à l'électrovanne (17) de façon que, lorsque la pression détectée par le capteur atteint ladite valeur basse prédéterminée, il commande la fermeture de la servovanne (18).

2. Dispositif selon la revendication 1, caractérisé en ce que la source de courant électrique adresse au primaire (14) de chaque transformateur tournant un courant continu haché ou "rupté".

3. Dispositif selon l'une quelconque des revendications 1 et 2, caractérisé en ce que l'électrovanne (17) utilise la pression existant dans les pneumatiques (20) qu'elle dessert pour assurer une assistance à l'ouverture du clapet (26) de la servovanne (18).

4. Dispositif selon la revendication 3, caractérisé en ce que l'électrovanne comporte un passage auxiliaire (19) relié au pneumatique et obturé par un clapet auxiliaire (56) susceptible d'être ouvert par l'organe électromagnétique (16) de l'électrovanne pour adresser la pression sur un organe moteur de grande surface (47) susceptible d'ouvrir le clapet principal (26).

5. Dispositif selon l'une quelconque des revendications 3 et 4, caractérisé en ce que les parties mobiles de l'électrovanne sont actionnées et/ou guidées par des membranes.

6. Dispositif selon l'une quelconque des revendications 1 à 5, caractérisé en ce que le secondaire (14) du transmetteur tournant alimente d'une part un organe de commande (16), de l'électrovanne (17) et d'autre part une alimentation stabilisée (15) alimentant le circuit (22, 23, 24) associé au capteur de pression (21).

7. Dispositif selon l'une quelconque des revendications 1 à 6, caractérisé en ce que ledit circuit associé au capteur comporte, à la sortie du capteur de pression (21) transformant la pression en une tension continue, un amplificateur (22) puis un comparateur (23) sur lequel est affichée la valeur de la pression basse prédéterminée.

8. Dispositif selon la revendication 7, caractérisé en ce qu'il comporte un circuit ((25) transmettant, par le biais du secondaire (14) et du primaire (12), une information montrant que la valeur basse prédéterminée de pression a été atteinte.

9. Dispositif selon l'une quelconque des revendications 1 à 8, caractérisé en ce que la partie fixe du dispositif comporte un calculateur (9) gérant, par l'intermédiaire d'interrupteurs (5, 6, 7, 8), des lignes d'alimentation des primaires (12) des transmetteurs tournants associés aux différentes roues.

10. Dispositif selon l'une quelconque des revendications 1 à 9, caractérisé en ce qu'il comporte une membrane (50) agissant sur le clapet (26) du passage de grand diamètre (27) et délimitant d'un côté une chambre (48) reliée à l'électrovanne (17) pour être mise à la pression du pneumatique (19) et ainsi actionner ledit clapet (26) et de l'autre côté une seconde chambre (61) ne recevant normalement pas la pression, ladite seconde chambre étant en liaison avec un conduit (60) reliant ladite chambre (48) à la purge (62), d'une façon telle qu'en cas d'obstruction de l'orifice de purge (62), il puisse s'établir, dans ladite seconde chambre (61), une contre-pression annihilant l'effet de. la pression de la première chambre (48) sur ladite membrane (50).

11. Dispositif selon l'une quelconque des revendications 1 à 10, caractérisé en ce que le capteur de pression (21) est relié à l'intérieur du pneumatique (20) par un passage (64) situé en un emplacement à l'écart du flux de dégonflage.

12. Dispositif selon l'une quelconque des revendications 1 à 11, caractérisé en ce qu'à des moyens permettant d'assurer le gonflage des roues des véhicules pendant la marche si ces derniers comprennent une source d'air ou de gaz comprimé, sont associées des électrovannes de distribution pilotées par le calculateur pour adresser la pression aux différentes roues par l'intermédiaire chaque fois de joints tournants qui ne sont mis sous pression que pendant l'opération de gonflage, lesdits joints tournants aboutissant à chaque fois à la chambre (65) formée par le passage de grand diamètre (27).

13. Dispositif selon l'une quelconque des revendications 1 à 12, caractérisé en ce que le primaire et le secondaire (9', 16') se trouvent disposés entre deux roulements (6', 7') de roue.

14. Dispositif selon l'une quelconque des revendications 1 à 12, caractérisé en ce que des moyens (39') fixés sur la partie fixe du véhicule et sensibles aux signaux de pression du capteur, sont agencés pour piloter le dégonflage et/ou le gonflage du pneumatique.

15. Dispositif selon la revendicátion 13 prise isolément ou combinée avec la revendication 14, caractérisé en ce que les roulements (6', 7') sont interposés entre une fusée et une jante coaxiale de la roue.

16. Dispositif selon l'une des revendications 13 à 15, caractérisé en ce que le transformateur tournant (9', 16') est interposé entre deux joints tournants eux-mêmes disposés entre les deux roulements (6', 7'), et permettant le gonflage et/ou le dégonflage du pneumatique.

17. Dispositif selon la revendication 16, caractérisé en ce que lesdits joints tournants ne se mettent en contact d'étanchéité qu'en cas d'établissement de pression.

18. Dispositif selon l'une quelconque des revendications 13, 15, 16, 17, caractérisé en ce que le primaire (6') du transformateur tournant est porté dans une gorge d'une pièce (8') en forme de manchon, calée sur une fusée (1') entre les deux roulements (6', 7'), et en ce que le secondaire (16') est disposé entre deux pièces en forme de L (12', 13') rapprochées l'une de l'autre pour former une gorge recevant le secondaire, lesdites pièces étant solidaires du moyeu de la roue.

19. Dispositif selon la revendication 18, caractérisé en ce que la fusée et/ou la jante possèdent des perçages permettant le passage des conducteurs électriques relatifs au primaire et au secondaire.

20. Dispositif selon l'une quelconque des revendications 13, 15 à 19, caractérisé en ce que la partie fixe, et notamment la fusée, ainsi que le moyeu et la roue, comportent des passages (25', 30') pour la circulation d'un fluide entre la partie fixe et le pneumatique.

21. Dispositif selon l'une quelconque des revendications 13 et 15 à 20, caractérisé en ce qu'il comprend des moyens de circulation d'huile au voisinage du transformateur tournant.

22. Dispositif selon l'une quelconque des revendications 13 à 21, caractérisé en ce que des signaux de pression transitent entre le secondaire et le primaire du transformateur tournant (9', 16') pendant l'intervalle de temps séparant deux impulsions consécutives d'un courant haché ou rupté adressé à l'électrovanne (47') depuis la partie fixe du véhicule par l'intermédiaire du transformateur tournant.

## Claims

1. A device for deflating tires of wheels of a vehicle, and in particular a rapid intervention vehicle or a military vehicle having a chassis, adapted to permit, by means of a centralized control, an extremely rapid deflation of the tires of the wheels of the vehicle when travelling, said device comprising, on each wheel having a tire (20) to be deflated, electrically-controlled valve means (17, 18) and a member (21) responsive to the predetermined low value of pressure which has to be reached at the end of the deflation by closing of these valve means, characterized in that it comprises, on each of said wheels, a servovalve (18) having a large-section-passage (27, 37) capable of instantaneously putting the tire (20) in communication with the open air, a pressure sensor (21) remote from the passage of the servovalve (18) and with which is associated a sensor electrical circuit (22, 23, 24), an electrovalve (17) for the servovalve (18) for causing the actuation thereof, an electromagnetic coupling element constituted by a rotating transmitter whose primary winding (12) which is fixed relative to the chassis of the vehicle is fed from a source of electric current and whose secondary winding (14) which is fixed to the wheel and is rotatable in facing relation to the primary winding (12) without contact therewith is connected on one hand to the electrovalve (17) for causing the opening of the servovalve (18) and on the other hand to the sensor circuit (22, 23, 24), which circuit is so connected with the electrovalve (17) that, when the pressure detected by the sensor reaches said predetermined low value, it causes the closure of the servovalve (18).

2. A device according to claim 1, characterized in that the source of electric current sends to the primary winding (14) of each rotating transmitter a chopped or otherwise interrupted direct current.

3. A device according to any one of claims 1 and 2, characterized in that the electrovalve (17) is adapted to employ the pressure existing in the tires (20) it serves for providing assistance to the opening of the valve closure member (26) of the servovalve (18).

4. A device according to claim 3, characterized in that the electrovalve comprises an auxiliary passage (19) connected to the respective tire and closed by an auxiliary valve closure member (56) adapted to be opened by the electromagnetic element (16) of the electrovalve for transmitting the pressure onto a driving element (47) of large area capable of opening the main valve closure member (26).

5. A device according to any one of claims 3 and 4, characterized in that the moving parts of the electrovalve are actuated and/or guided by diaphragms.

6. A device according to any one of claims 1 to 5, characterized in that the secondary winding (14) of the rotating transmitter supplies power to a control element (16) of the electrovalve (17) and to a stabilized supply means (15) for supplying current to the circuit (22, 23, 24) associated with the pressure sensor (21).

7. A device according to any one of claims 1 to 6, characterized in that the said circuit associated with the sensor comprises, at the output of the pressure sensor (21) which converts the detected pressure into a dc voltage, an amplifier (22) and, after the amplifier, a comparator (23) to which the desired predetermined low value of the pressure is input.

8. A device according to claim 7, characterized in that it comprises a circuit (25) for transmitting, through the secondary winding (14) and primary winding (12), data showing that the predetermined low pressure value has been reached.

9. A device according to any one of claims 1 to 8, characterized in that the stationary part of the device comprises a computer (9) controlling through switches (5, 6, 7, 8) power supply lines of the primary windings (12) of the rotating transmitters associated with the various wheels.

10. A device according to any one of claims 1 to 9, characterized in that it comprises a diaphragm (50) associated with the valve closure member (26) for the large-section passage (27) and defining, on one side, a chamber (48) connected to the electrovalve (17) so as to be subjected to the pressure of the tire (19) and thereby actuate said valve closure member (26) and, on the opposite side, a second chamber (61) which normally does not receive the pressure, said second chamber communicating with a conduit (60) connecting said chamber (48) to a purge orifice (62), in such manner that, in the event of obstruction of the purge orifice (62), a counterpressure can be established in said second chamber (61) which cancels out the effect of the pressure of the first chamber (48) on said diaphragm (50).

11. A device according to any one of claims 1 to 10, characterized in that the pressure sensor (21) is connected to the interior of the tire (20) through a passage (64) located at a distance from the deflating stream.

12. A device according to any one of claims 1 to 11, characterized in that with means for inflating the tires of the wheels of the vehicles during the travelling of the vehicles, when the latter include a source of compressed air or gas, are associated distribution electrovalves piloted by the computer so as to transmit the pressure to the various tires through respective rotating sealing elements, said rotating sealing elements being adapted to be put under pressure only during the inflating operation and communicating each time with a chamber (65) formed by said large-section passage (27).

13. A device according to any one of claims 1 to

12, characterized in that the primary and secondary windings (9', 16') are disposed between two wheel rolling bearings (6', 7').

14. A device according to any one of claims 1 to 12, characterized in that means (39') fixed to the chassis of the vehicle and responsive to pressure signals delivered by the sensor are adapted to control the deflation and/or inflation of the respective tire.

15. A device according to claim 13 taken separately or in combination with claim 14, characterized in that the rolling bearings (6', 7') are interposed between a stub-axle and a coaxial wheel rim.

16. A device according to any one of claims 13 to 15, characterized in that the rotating transmitter (9', 16') is interposed between the two rotating sealing elements themselves interposed between the two rolling bearings (6', 7') and adapted to permit inflation and/or deflation of the respective tire.

17. A device according to claim 16, characterized in that said rotating sealing elements are adapted to make sealing contact only when pressure is established.

18. A device according to any one of claims 13, 15, 16, 17, characterized in that the primary winding (6') of the rotating transmitter is carried in the groove of a sleeve-shaped element (8') fastened on a stub-axle (1') between the two rolling bearings (6', 7') and in that the secondary winding (16') is disposed between two L-shaped members (12', 13') close to each other so as to form a groove accommodating the secondary winding, said members being rigid with the wheel hub.

19. A device according to claim 18, characterized in that the stub-axle and/or the rim comprise holes for the passage of electric conductors associated with the primary and secondary windings.

20. A device according to any one of claims 13, 15 to 19, characterized in that the fixed part, in particular the stub axle, as well as the rim and the wheel, include passages (25', 30') for the circulation of a fluid between the fixed part and the tire.

21. A device according to any one of claims 13 and 15 to 20, characterized in that it includes oil circulating means adjacent the rotating transmitter.

22. A device according to any one of claims 13 to 21, characterized in that pressure signals travel between the secondary winding and the primary winding of the rotating transmitter (9', 16') during the interval of time between two consecutive pulses of a chopped or otherwise interrupted current sent to the electrovalve (47') from the fixed part of the vehicle through the rotating transmitter.

**Patentansprüche**

1. Vorrichtung zum Ablassen von Luft aus den Rädern von Fahrzeugen, insbesondere Schnelleinsatz- oder Militärfahrzeugen, die dazu bestimmt ist, mit Hilfe einer zentral eingerichteten Steuereinrichtung eine extrem schnelle Verminderung des Luftdrucks in den Reifen (20) der Räder des Fahrzeugs während des Laufs zu ermöglichen, enthaltend an jedem, einen zu entlüftenden Reifen (20) tragenden Rad eine elektrisch gesteuerte Ventileinrichtung (17, 18) und ein Element (21), das auf einen vorbestimmten niedrigen, am Ende der Entlüftung zu erreichenden Druck anspricht, um die Ventileinrichtung zu schließen, dadurch gekennzeichnet, daß sie an jedem der genannten Räder enthält: ein Servoventil (18) großen Durchgangsquerschnitts (25, 37), das dazu eingerichtet ist, den Reifen (20) mit der Außenluft augenblicklich in Verbindung zu setzen, einen Druckaufnehmer (21), der seitlich des Durchlasses des Servoventils (18) angeordnet ist und dem eine elektrische Sensorschaltung (22, 23 ,24) zugeordnet ist, ein Magnetventil (17) des Servoventils (18), um dessen Funktion zu steuern, und ein elektromagnetisches Kopplungsorgan, das von einem Drehtransformator gebildet ist, von dem die Primärseite (12), die bezüglich des Fahrgestells des Fahrzeugs festgelegt ist, von einer Stromquelle versorgt ist, und die Sekundärseite (14), die mit dem Rad fest verbunden ist und sich ohne Berührung der Primärseite (12), dieser gegenüberstehend, dreht, einerseits mit dem Elektromagneten (17) verbunden ist, um das Öffnen des Servoventils (18) zu steuern, und andererseits mit der Sensorschaltung (22, 23, 24) verbunden ist, wobei letztere auch mit dem Magnetventil (17) derart verbunden ist, daß wenn der von dem Druckaufnehmer ermittelte Druck den genannten niedrigen vorbestimmten Wert erreicht, er das Schließen des Servoventils (18) befiehlt.

2. Vorrichtung nach Anspruch 1, dadurch gekennzeichnet, daß die elektrische Stromquelle der Primärseite (14) eines jeden Drehtransformators einen zerhackten oder "unterbrochenen" Gleichstrom zuführt.

3. Vorrichtung nach einem der Ansprüche 1 und 2, dadurch gekennzeichnet, daß das Magnetventil (17) den in den Reifen (20) herrschenden Druck, den es steuert, dazu verwendet, eine Unterstützung beim öffnen des Schiebers (26) des Servoventils (18) sicherzustellen.

4. Vorrichtung nach Anspruch 3, dadurch gekennzeichnet, daß das Magnetventil einen Hilfskanal (19) aufweist, der mit dem Reifen verbunden und von einem Hilfsschieber (56) verschlossen ist, der dazu eingerichtet ist, durch das elektromagnetische Organ (16) des Magnetventils geöffnet zu werden, um den Druck an ein Stellorgan großer Fläche (47) zu legen, das dazu geeignet ist, den Hauptschieber (26) zu öffnen.

5. Vorrichtung nach einem der Ansprüche 3 und 4, dadurch gekennzeichnet, daß die beweglichen Teile des Magnetventils durch Membranen betätigt und/oder geführt sind.

6. Vorrichtung nach einem der Ansprüche 1 bis 5, dadurch gekennzeichnet, daß die Sekundärseite (14) des Drehtransformators einesteils ein Steuerorgan (16) des Magnetventils (17) und andernteils einen Spannungsstabilisator (15) versorgt, der die dem Druckaufnehmer (21) zugeordnete Schaltung (22, 23, 24) versorgt.

7. Vorrichtung nach einem der Ansprüche 1 bis 6, dadurch gekennzeichnet, daß die dem Aufnehmer zugeordnete Schaltung am Ausgang des Druckaufnehmers (21) der den Druck in eine Gleichspannung umwandelt, einen Verstärker (22) und anschließend einen Komparator (23) enthält, an dem der Wert des vorbestimmten niedrigen Drucks eingestellt ist.

8. Vorrichtung nach Anspruch 7, dadurch gekennzeichnet, daß sie eine Schaltung (25) enthält, die auf dem Umweg über die Sekundärseite (14) und die Primärseite (12) eine Information überträgt, die anzeigt, daß der vorbestimmte niedrige Druckwert erreicht worden ist.

9. Vorrichtung nach einem der Ansprüche 1 bis 8, dadurch gekennzeichnet, daß der feste Teil der Vorrichtung einen Rechner (9) enthält, der über Schalter (5, 6, 7, 8) die Versorgungsleitungen der Primärseiten (12) der Drehtransformatoren versorgt, die den verschiedenen Rädern zugeordnet sind.

10. Vorrichtung nach einem der Ansprüche 1 bis 9, dadurch gekennzeichnet, daß sie eine Membran (50) enthält, die auf den Schieber (26) im Durchlaß großen Durchmessers (27) einwirkt und auf der einen Seite eine Hammer (48), die mit dem Magnetventil (17) verbunden ist, um auf den Druck des Reifens (19) versetzt zu werden und so den Schieber (26) zu betätigen, und auf der anderen Seite eine zweite Hammer (61) begrenzt, die normalerweise nicht den Druck erhält und die mit einer Leitung (60) in Verbindung ist, die die genannte Kammer (48) mit dem Auslaß (62) so verbindet, daß im Falle einer Verstopfung der Auslaßöffnung (62) sie in der genannten zweiten Kammer (61) einen Gegendruck einrichten kann der die Wirkung des Drucks in der ersten Kammer (48) auf die genannte Membran (50) aufhebt.

11. Vorrichtung nach einem der Ansprüche 1 bis 10, dadurch gekennzeichnet, daß der Druckaufnehmer (21) mit der Kammer des Reifens (20) über einen Durchlaß (64) verbunden ist, der an einer Stelle seitlich der Entlüftungsströmung angeordnet ist.

12. Vorrichtung nach einem der Ansprüche 1 bis 11, dadurch gekennzeichnet, daß Einrichtungen, die dem Aufblasen der Fahrzeugräder beim Fahren dienen, wenn letztere eine Druckluft- oder Druckgasquelle enthalten, Verteilermagnetventile zugeordnet sind, die von dem Rechner gesteuert sind, um den Druck den verschiedenen Rädern jeweils über Drehdichtungen zuzuführen, die nur während des Aufblasbetriebs unter Druck stehen und die jeweils in der Kammer (65) enden, die von dem Durchlaß großen Durchmessers (27) gebildet ist.

13. Vorrichtung nach einem der Ansprüche 1 bis 12, dadurch gekennzeichnet, daß die Primärseite und die Sekundärseite (9', 16') zwischen zwei Lagern (6', 7') des Rades angeordnet sind.

14. Vorrichtung nach einem der Ansprüche 1 bis 12, dadurch gekennzeichnet, daß an dem festen Teil des Fahrzeugs angeordnete Einrichtungen (39'), die auf die Signale des Druckaufnehmers ansprechen, zur Steuerung der Entlüftung und/oder des Aufblasens des Reifens betrieben sind.

15. Vorrichtung nach Anspruch 13 allein oder in Kombination mit dem Anspruch 14, dadurch gekennzeichnet, daß die Lager (6', 7') zwischen einem Achsschenkel und einer koaxialen Felge des Rades angeordnet sind.

16. Vorrichtung nach einem der Ansprüche 13 bis 15, dadurch gekennzeichnet, daß der Drehtransformator (9', 16') zwischen zwei Drehdichtungen angeordnet ist, die ihrerseits zwischen den zwei Lagern (6', 7') angeordnet sind und das Aufblasen und/oder das Entlüften des Reifens ermöglichen.

17. Vorrichtung nach Anspruch 16, dadurch gekennzeichnet, daß die genannten Drehdichtungen sich mit dem dichten Abschluß nur im Falle der Einrichtung von Druck in Berührung, setzen.

18. Vorrichtung nach einem der Ansprüche 13, 15, 16, 17, dadurch gekennzeichnet, daß die Primärseite (6') des Drehtransformators in einer Kehle eines manschettenförmigen Teils (8') befestigt ist, das auf einem Achsschenkel (1') zwischen den zwei Lagern (6', 7') verkeilt ist, und daß die Sekundärseite (16') zwischen zwei L-förmigen Teilen (12', 13') angeordnet ist, die einander dicht gegenüberstehen, um eine Kehle auszubilden, die die Sekundärseite aufnimmt, welche genannten Teile mit der Nabe des Rades fest verbunden sind.

19. Vorrichtung nach Anspruch 18, dadurch gekennzeichnet, daß der Achsschenkel und/oder die Felge Bohrungen aufweisen, die die Durchführung elektrischer Leiter ermöglichen, die zu der Primärseite und der Sekundärseite gehören.

20. Vorrichtung nach einem der Ansprüche 13, 15 und 16, dadurch gekennzeichnet, daß der feste Teil, und insbesondere der Achsschenkel, sowie die Habe und das Rad Bohrungen (25', 30') für die Umwälzung eines Fluides zwischen dem festen Teil und dem Reifen aufweisen.

21. Vorrichtung nach einem der Ansprüche 13 und 15 bis 20, dadurch gekennzeichnet, daß sie Einrichtungen zur Umwälzung von Öl in Nachbarschaft des Drehtransformators aufweist.

22. Vorrichtung nach einem der Ansprüche 13 bis 21, dadurch gekennzeichnet, daß Drucksignale zwischen der Sekundärseite und der Primärseite des Drehtransformators (9', 16') während des Zeitintervalls übergehen, das zwei aufeinanderfolgende Impulse eines zerhackten oder unterbrochenen Stroms voneinander trennt, der von dem festen Teil des Fahrzeugs über den Drehtransformator an das Magnetventil (47') gerichtet wird.

Fig.1

*Fig. 2*

Fig.3

EP 0 193 452 B1

Fig. 4

EP 0 193 452 B1

Fig. 5

9